# EUROPEAN PATENT APPLICATION

(11) **EP 4 629 410 A1**
(43) Date of publication of application: **08.10.2025**
(21) Application number: 24852984.4
(22) Date of filing: 26.09.2024
(51) Int. Cl.: H01M 50/148, H01M 50/593, H01M 50/233, H01M 50/136

(54) **INSULATING PROTECTIVE SLEEVE FOR BATTERY, AND BATTERY**

(30) Priority: 22.02.2024 CN 202420331226 U
(71) Applicant: Eve Power Co., Ltd., Jingmen, Hubei 448000 (CN)
(72) Inventor: LI, Qiuping, Jingmen, Hubei 448000 (CN); ZHU, Pengxiang, Jingmen, Hubei 448000 (CN); SONG, Xiangling, Jingmen, Hubei 448000 (CN); CHEN, Xianyang, Jingmen, Hubei 448000 (CN); SUN, Fei, Jingmen, Hubei 448000 (CN)
(74) Representative: Berggren Oy
(86) International application number: PCT/CN2024/121454
(87) International publication number: WO 2025/175770

(57) **Abstract**

The present disclosure provides a cell insulation protective sheath (100), which includes a first insulating portion (10) and a second insulatiing portion (20) that are disposed opposite to each other, a first connecting portion (30) and a second connecting portion (40) that are disposed opposite to each other, a third insulating portion (50), and two folding portions (60). The first insulating portion (10), the second insulating portion (20), the third insulating portion (50), the first connecting portion (30), and the second connecting portion (40) enclose to form an accommodating cavity. The two folding portions (60) are integrally connected to the third insulating portion (50).

## Description

The present disclosure claims priority to Chinese Patent Application No. 202420331226.9, filed on February 22, 2024, the disclosure of which are incorporated herein by reference in its entirety.

### TECHNICAL FIELD

The present disclosure relates to the technical field of batteries, and in particular, to a cell insulation protective sheath and a battery.

### BACKGROUND

Lithium batteries are widely used in industries such as automobiles, electronic products, and energy storage systems. They have advantages such as small size, high energy density, long service life, and environmental protection. The cell package is located inside the battery. In related arts, the cell package is coated with a film, which is used to effectively isolate the contact between cell package and the aluminum housing and prevent the aluminum housing from being corroded by electrochemistry.

### SUMMARY

However, there is still a gap in this coating method, which leads to failure to isolate the cell package and the housing, resulting in electrochemical corrosion of the aluminum housing.

In a first aspect, the present disclosure provides a cell insulation protective sheath, which includes:
a first insulating portion and a second insulating portion disposed opposite to each other;
a first connecting portion and a second connecting portion disposed opposite to each other and connecting the first insulating portion and the second insulating portion, respectively;
a third insulating portion connected to the first insulating portion, the second insulating portion, the first connecting portion, and the second connecting portion, respectively, wherein the first insulating portion, the second insulating portion, the third insulating portion, the first connecting portion, and the second connecting portion enclose to form an accommodating cavity in which a cell is disposed; and
two folding portions integrally connected to the third insulating portion and attached to one side of the first connecting portion and one side of the second connecting portion away from the cell, respectively.

In a second aspect, the present disclosure provides a battery, which includes:
a housing;
a battery cell located in the housing;
a cell insulation protective sheath, which covers the cell and is located between the cell and the housing.

### BENEFICIAL EFFECTS

The cell insulation sheath provided in the present disclosure includes at least the following beneficial effects: the folding portions can be foldably attached to one side of the first connecting portion and the second connecting portion away from the cell, so that the first connecting portion and the second connecting portion are partially covered inside, so as to prevent the electrochemical substances in the cell from overflowing from the corners of the cell insulation protective sheath, thereby greatly isolating the housing and the cell.

### BRIEF DESCRIPTION OF THE DRAWINGS

FIG. 1 is a schematic structural diagram of a cell insulation protective sheath according to an embodiment of the present disclosure;
FIG. 2 is another schematic structural diagram of a cell insulation protective sheath according to an embodiment of the present disclosure;
FIG. 3 is a schematic diagram of a unfolded structure of a cell insulation protective sheath according to an embodiment of the present disclosure;
FIG. 4 is a schematic structural diagram of a cell insulation protective sheath according to another embodiment of the present disclosure;
FIG. 5 is a top view of a cell insulation protective sheath according to another embodiment of the present disclosure;
FIG. 6 is a schematic diagram of a unfolded structure of a cell insulation protective sheath according to another embodiment of the present disclosure;
FIG. 7 is a schematic structural diagram of a cell insulation protective sheath according to still another embodiment of the present disclosure;
FIG. 8 is another schematic structural diagram of a cell insulation protective sheath according to still another embodiment of the present disclosure; and
FIG. 9 is a schematic diagram of a unfolded structure of a cell insulation protective sheath according to another embodiment of the present disclosure.

### List of reference signs:

100, cell insulation protective sheath; 10, first insulating portion; 20, second insulating portion; 30, first connecting portion; 301, first folding portion; 302, second folding portion; 40, second connecting portion; 401, third folding portion; 402, fourth folding portion; 50, third insulating portion; 60, folding portion; 601, first sub-portion; 602, second sub-portion; 603, third sub-portion; 401A, fifth folding portion; 402A, sixth folding portion; 60A, bottom supporting plate.

### DETAILED DESCRIPTION

In description of the present disclosure, the terms "connection", "linking" and "fixing" should be broadly understood, for example, it may be a fixed connection, a detachable connection, or an integral connection, unless otherwise clearly specified and defined. It may be a mechanical connection or an electrical connection. It may be a direct connection or an indirect connection via an intermediate medium, may be an internal communication within two elements or an interaction between two elements. The specific meaning of the above terms in the present disclosure may be understood by a person skilled in the art according to specific situations.

In the present disclosure, unless clearly specified and limited otherwise, a first feature "above" or "below" a second feature may include direct contact of the first feature and the second feature, and it may also be included that the first feature and the second feature are not in direct contact but are contacted by additional features between them. Moreover, the first feature "on", "above" and "upper" the second feature includes the first feature directly above and obliquely upward the second feature, or merely indicates that a level of the first feature is higher than a level of the second feature. The first feature "lower", "below" and "under" the second feature includes the first feature directly below and obliquely downward the second feature, or merely indicates that a level of the first feature is less than a level of the second feature.

In the description of the present disclosure, terms such as "above", "below", "left", "right", "front", "back" refer to the orientation or positional relationship shown in the appended drawings, and are only for the purpose of facilitating the description and simplifying of operation, rather than indicating or implying that the apparatus or component referred to must have a particular orientation or must be configured or operated in a particular orientation, therefore should not be construed as a limitation towards the present disclosure. In addition, terms such as "first", "second" are merely for the purpose of description and should not be construed as an indication or implication of relative importance thereof.

### Embodiment 1

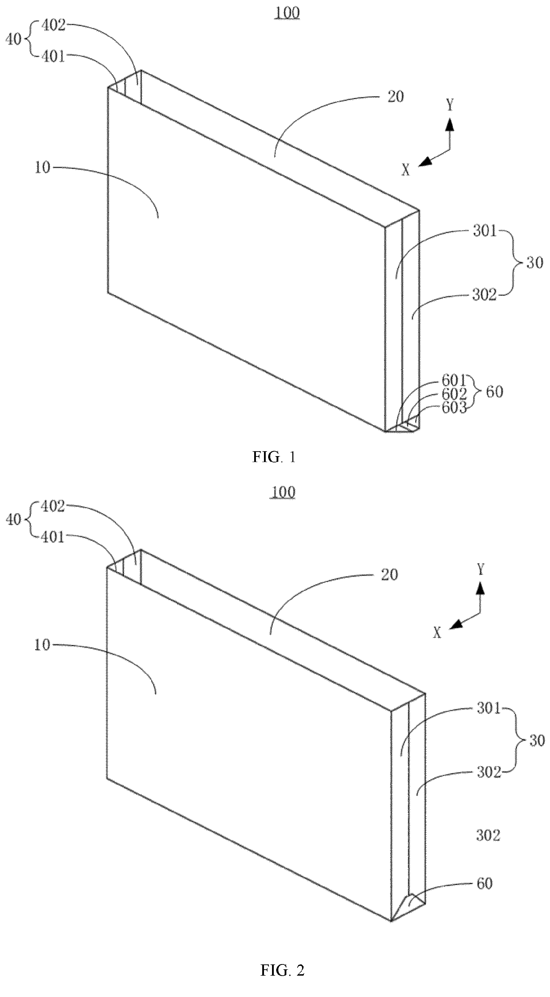

Referring to FIGs. 1 to 3, the present disclosure provides a cell insulation protective sheath 100, which includes:
a first insulating portion 10 and a second insulating portion 20 disposed opposite to each other;
a first connecting portion 30 and a second connecting portion 40 disposed opposite to each other and connecting the first insulating portion 10 and the second insulating portion 20, respectively;
a third insulating portion 50 connected to the first insulating portion 10, the second insulating portion 20, the first connecting portion 30, and the second connecting portion 40, respectively, wherein the first insulating portion 10, the second insulating portion 20, the third insulating portion 50, the first connecting portion 30, and the second connecting portion 40 enclose to form an accommodating cavity in which a cell is disposed; and
two folding portions 60 integrally connected to the third insulating portion 50 and attached to one side of the first connecting portion 30 and one side of the second connecting portion 40 away from the cell, respectively.

The cell insulation protective sheath 100 is configured, for example, to cover a square cell to insulate the cell from the housing, thereby preventing electrochemical reactions or substances of the cell from corroding the housing, thereby affecting the life and performance of the battery. The cell insulation protective sheath 100 can be made of a material for example, polypropylene (PP) or polyethyleneterephthalate (PET).

Referring to FIG. 2, for example, the first insulating portion 10, the second insulating portion 20, the first connecting portion 30, and the second connecting portion 40 enclose to form a square accommodating cavity. One side of the accommodating cavity is an opening, and a cell is placed in the accommodating cavity from the opening. The cell and the cell insulation protective sheath 100 are placed in the housing together, and the cell insulation protective sheath 100 is capable of preventing the electrochemical reaction of the cell or substances generated by it from corroding the housing.

Referring to FIG. 2, the folding portions 60 are connected to the third insulating portion 50, and cover one end of the first connecting portion 30 or the second connecting portion 40 facing the third insulating portion 50. The folding portions 60 are attached to one side of the first connecting portion 30 or the second connecting portion 40 away from the cell. That is, they cover the joints between the first connecting portion 30 or the second connecting portion 40 and the third insulating portion 50, so as to ensure that there is no gap at the connecting corners thereof. In this way the gap where the electrochemical substances overflow from the cell insulation protective sheath 100 is sealed, thereby reducing the influence of the electrochemical reaction or leakage of the substances generated therefrom on the housing. That is, the cell insulation protective sheath 100 isolates the cell and the housing, thereby preventing the housing from being corroded.

One side of the cell insulation protective sheath 100 facing the cell is, for example, adhesive, and the cell cell insulation protective sheath 100 is adhered to the cell by adhesive, so as to ensure that the cell insulation protective sheath 100 is not easy to fall off from the cell, thereby isolating the cell from the housing, and preventing the housing from being corroded.

Referring to FIGs. 2 to 3, in an embodiment of the present disclosure, the first connecting portion 30 includes a first folding portion 301 and a second folding portion 302. The first folding portion 301 is vertically connected to the first insulating portion 10, the second folding portion 302 is vertically connected to the second insulating portion 20, and the first folding portion 301 and the second folding portion 302 are connected in the first direction X. The first folding portion 301 and the second folding portion 302 are located on the same side of the first insulating portion 10 and the second insulating portion 20. One of the two folding portions 60 is attached and connected to the first folding portion 301 and the second folding portion 302.

The second connecting portion 40 includes a third folding portion 401 and a fourth folding portion 402. The third folding portion 401 is vertically connected to one side of the first insulating portion 10 away from the first folding portion 301. The fourth folding portion 402 is vertically connected to one side of the second insulating portion 20 away from the second folding portion 302. The third folding portion 401 and the fourth folding portion 402 are connected in the first direction X. The other one of the two folding portions 60 is attached and connected to the third folding portion 401 and the fourth folding portion 402.

The first folding portion 301 is bent 90 degrees with respect to the first insulating portion 10 or the second insulating portion 20, and is bonded to the second folding portion 302 in the first direction X to form a plane. The second folding portion 302 is bent 90 degrees with respect to the first insulating portion 10 or the second insulating portion 20, and is bonded to the first folding portion 301 in the first direction X to form a plane. In this way, a partially symmetrical accommodating cavity is formed. The first folding portion 301 and the second folding portion 302 are bonded to form a first connecting portion 30.

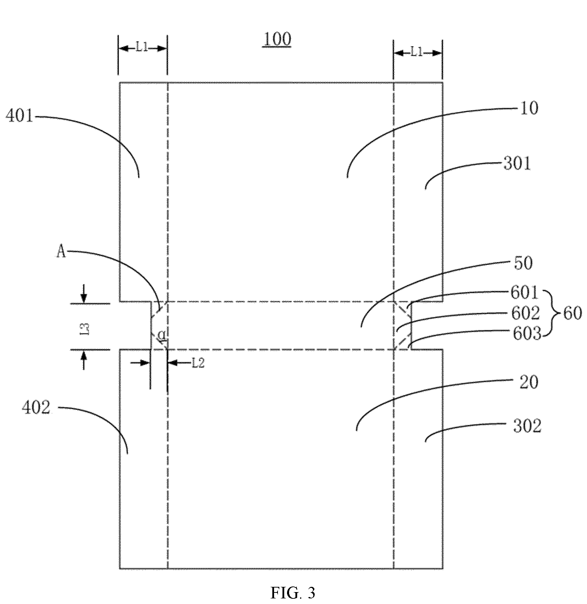

Referring to FIGs. 2 and 3, in an embodiment of the present disclosure, the first folding portion 301 and the third folding portion 401 extend from the first insulating portion 10 to the second insulating portion 20 in the first direction X. The second folding portion 302 and the fourth folding portion 402 extend from the second insulating portion 20 to the first insulating portion 10 in the first direction X. Each of the first folding portion 301, the third folding portion 401, the second folding portion 302 and the fourth folding portion 402 has a first length L1.

Each of the folding portions 60 extends in the second direction Y and has a second length L2 in the second direction Y, wherein the second length L2 is less than the first length L1.

Referring to FIG. 3, a distance of the third insulating portion 50 extending from the first insulating portion 10 to the second insulating portion 20 in the first direction X is a third length L3. A sum of the lengths of the connections between the first folding portion 301 and the second folding portion 302 is equal to the third length L3. That is, the length of the first connection portion 30 between the second insulating portion 20 and the first insulating portion 10 is equal to the third length L3.

In an embodiment of the present disclosure, the opposite sides of the first folding portion 301 and the second folding portion 302 are bonded to each other but not overlapped, and a sum of lengths of the first folding portion 301 and the second folding portion 302 after being bonded in the first direction X is equal to the third length L3 of the third insulating portion 50. The ratio of the first length L1 of the first folding portion 301 to the first length L1 of the second folding portion 302 to the third length L3 is, for example, 1: 1:2.

In another embodiment of the present disclosure, one side of the first folding portion 301 and one side of the second folding portion 302 facing the cell are partially overlapped or completely overlapped. The length of the first connecting portion 30 formed by partially or completely overlapping the first folding portion 301 and the second folding portion 302 extending in the first direction X is equal to the third length L3. The ratio of the first length L1 of the first folding portion 301 to the first length L1 of the second folding portion 302 to the third length L3 is, for example, (6 to 10):(6 to 10):10.

The first folding portion 301 and the second folding portion 302 are partially overlapped by, for example, 5 mm to 20 mm.

Referring to FIGs. 1 to 3, in an embodiment of the present disclosure, the second connecting portion 40 includes a third folding portion 401 and a fourth folding portion 402. The third folding portion 401 is vertically connected to one side of the first insulating portion 10 away from the first folding portion 301. The fourth folding portion 402 is vertically connected to one side of the second insulating portion 20 away from the second folding portion 302. The third folding portion 401 and the fourth folding portion 402 are connected in the first direction X. The third folding portion 401 and the fourth folding portion 402 are located on the same side of the first insulating portion 10 and the second insulating portion 20. One of the two folding portions 60 is attached and connected to the first folding portion 301 and the second folding portion 302, and the other one of the two folding portions 60 is attached and connected to the third folding portion 401 and the fourth folding portion 402.

The third folding portion 401 is, for example, bent 90 degrees with respect to the first insulating portion 10 or the second insulating portion 20, and is bonded to the fourth folding portion 402. The fourth folding portion 402 is, for example, bent 90 degrees with respect to the first insulating portion 10 or the second insulating portion 20, and is bonded to the third folding portion 401 to form a plane, so as to enclose and form another symmetrical portion of the accommodating cavity. The third folding portion 401 and the fourth folding portion 402 are bonded to each other to form the second connecting portion 40.

Referring to FIG. 3, in an embodiment of the present disclosure, the first folding portion 301 and the third folding portion 401 extend from the first insulating portion 10 to the second insulating portion 20 in the first direction X. The second folding portion 302 and the fourth folding portion 402 extend from the second insulating portion 20 to the first insulating portion 10 in the first direction X. Each of the first folding portion 301, the third folding portion 401, the second folding portion 302 and the fourth folding portion 402 has a first length L1.

Each of the folding portions 60 extends in the second direction Y and has a second length L2 in the second direction Y, wherein the second length L2 is less than the first length L1.

In some embodiments of the present disclosure, the ratio of the second length to the first length is (2 to 8): 10.

The distance of the third insulating portion 50 extending from the first insulating portion 10 to the second insulating portion 20 in the first direction X is a third length L3. A sum of the lengths of the connections between the third folding portion 401 and the fourth folding portion 402 is equal to the third length L3. That is, the length of the second connecting portion 40 between the second insulating portion 20 and the first insulating portion 10 is equal to the third length L3.

In an embodiment of the present disclosure, the opposite sides of the third folding portion 401 and the fourth folding portion 402 are bonded to each other but not overlapped, and a sum of lengths of the third folding portion 401 and the fourth folding portion 402 after being bonded extending in the first direction X towards one side close to the cell is equal to the third length L3. The ratio of the first length L1 of the third folding portion 401 to the first length L1 of the fourth folding portion 402 to the third length L3 is, for example, 1: 1:2.

In another embodiment of the present disclosure, one side of the third folding portion 401 and one side of the fourth folding portion 402 facing towards the cell are partially overlapped or fully overlapped, and a sum of lengths of the third folding portion 401 and the fourth folding portion 402 after being partially overlapped or fully overlapped and extending towards one side close to the cell in the first direction X is equal to the third length L3. That is, the length of the second connecting portion 40 between the second insulating portion 20 and the first insulating portion 10 is equal to the third length L3. In other waords, the ratio of the first length L1 of the third folding portion 401 to the first length L1 of the fourth folding portion 402 to the third length L3 is, for example, (6-10):(6-10): 10.

The third folding portion 401 and the fourth folding portion 402 are partially overlapped by, for example, 5 mm to 20 mm.

In addition, a distance of the third insulating portion 50 extending from the first insulating portion 10 to the second insulating portion 20 in the first direction X is a third length L3. The ratio of the third length L3 to the first length L1 is 10:(5 to 10).

In an embodiment of the present disclosure, the distance of the third insulating portion 50 entending in the first direction X is the third length L3. The ratio of the third length L3 to the first length L1 is 10:(5 to 10), which makes it easy to fold the cell insulation protective sheath 100 and saves costs to a certain extent.

In an embodiment of the present disclosure, the third insulating portion 50 is integrally formed with the first insulating portion 10, the second insulating portion 20, and the folding portion 60. The first folding portion 301 and the third folding portion 401 are integrally formed with the first insulating portion 10, respectively. The second folding portion 302 and the fourth folding portion 402 are integrally formed with the second insulating portion 20, respectively.

Referring to FIG. 3, in an embodiment of the present disclosure, each of the folding portion 60 includes an integrally formed first sub-portion 601, a second sub-portion 602 and a third sub-portion 603. The second sub-portion 602 is connected to one side of the third insulating portion 50 and is attached and connected to the first connection portion 30 or the second connection portion 40 in the second direction Y. The first sub-portion 601 and the third sub-portion 603 are respectively disposed on both sides of the second sub-portion 602. One of the first sub-portion 601 and the third sub-portion 603 is attached to the first folding portion 301 or the third folding portion 401. One side of the first sub-portion 601 or one side of the third sub-portion 603 away from the first folding portion 301 or the third folding portion 401 is attached to the second sub-portion 602.

The other one of the first sub-portion 601 and the third sub-portion 603 is attached to the second folding portion 302 or the fourth folding portion 402. One side of the other one of the first sub-portion 601 and the third sub-portion 603 away from the second folding portion 302 or the fourth folding portion 402 is attached to the second sub-portion 602.

A crease A is formed at both joints of the first sub-portion 601 and the third sub-portion 603 with the second sub-portion 602, and the crease A forms an acute angle α with with one side of the second sub-portion 602 close to the third insulating portion 50, wherein 45°≤α≤60°.

The folding portion 60 is, for example, rectangular in shape when it is not folded. The second sub-portion 602 is, for example, trapezoidal in shape, the two included angles of the trapezoid are, for example, acute angles α. The first sub-portion 601 and the third sub-portion 603 are triangular in shape, so as to cooperate with the trapezoidal second sub-portion 602 to form a rectangular folding portion 60. The crease A forms an acute angle α with one side of the second sub-portion 602 close to the third insulating portion 50. The angle is set so that the ends of the two creases A away from the third insulating portion 50 do not intersect, thereby uneven phenomenon caused by overlapping of one side of the folding portions 60 away from the third insulating portion 50 during the folding process is prevented. The uneven phenomenon may lead to poor folding during the folding process of the cell insulation protective sheath 100, thereby affecting the effect of the cell insulation protective sheath 100. The crease A is a pre-crease, that is, the crease A can be processed first during the factory processing stage, for example, to facilitate subsequent folding and forming.

In an embodiment, one side of the first folding portion 301 away from the cell and one side of the second folding portion 302 away from the cell may also be connected by gluing. One side of the third folding portion 401 away from the cell and one side of the fourth folding portion 402 away from the cell can also be connected by gluing.

### Embodiment 2

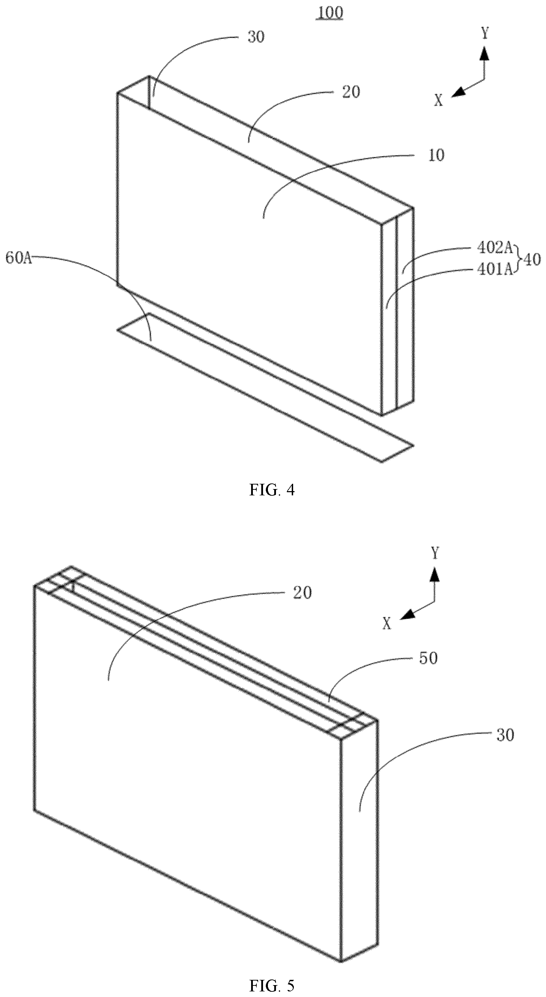

Referring to FIGs. 4 to 6, the present disclosure provides a cell insulation protective sheath 100, which includes:
a first insulating portion 10 and a second insulating portion 20 disposed opposite to each other;
a first connecting portion 30 and a second connecting portion 40 disposed opposite to each other and connecting the first insulating portion 10 and the second insulating portion 20, respectively; the second connecting portion 40 includes a fifth folding portion 401A and a sixth folding portion 402A connected to each other in a first direction X, one of the fifth folding portion 401A and the sixth folding portion 402A is connected to the first insulating portion 10 and the other one of the fifth folding portion 401A and the sixth folding portion 402A is connected to the second insulating portion 20;
a third insulating portion 50 disposed on a same side of the first insulating portion 10, the second insulating portion 20, the first connecting portion 30, and the second connecting portion 40; the first insulating portion 10, the second insulating portion 20, the first connecting portion 30, the second connecting portion 40, and the third insulating portion 50 enclose to form an accommodating cavity in which a cell is disposed; and
a bottom supporting plate 60A connected to one side of the third insulating portion 50 away from the cell by hot melting.

The cell insulation protective sheath 100 is configured, for example, to cover a square cell to insulate the cell from the housing, thereby preventing electrochemical reactions or substances of the cell from corroding the housing, thereby affecting the life and performance of the battery. The cell insulation protective sheath 100 can be made of a material for example, polypropylene (PP) or polyethyleneterephthalate (PET), but is not limited thereto.

Referring to FIG. 4, for example, the first insulating portion 10, the second insulating portion 20, the first connecting portion 30, the second connecting portion 40, the third insulating portion 50, and the bottom supporting plate 60A enclose to form a square accommodating cavity. One side of the accommodating cavity is an opening, and a cell is placed in the accommodating cavity from the opening. The cell and the cell insulation protective sheath 100 are placed in the housing together, which can prevent the electrochemical reaction of the cell or substances by it from corroding the housing.

The third insulating portion 50 is folded toward the side close to the cell. The bottom supporting plate 60A is disposed on one side of the third insulating portion 50 away from the cell. The third insulating portion 50 is attached to the bottom of part of the cell, and the connection with the bottom supporting plate 60A ensures that the electrochemical substances does not overflow from the bottom corners of the cell insulation protective sheath 100 to contact the housing, thus completely isolating the cell from the housing.

One side of the cell insulation protective sheath 100 facing the cell is, for example, adhesive, and the cell cell insulation protective sheath 100 is adhered to the cell by adhesive, so as to ensure that the cell insulation protective sheath 100 is not easy to fall off from the cell, thereby isolating the cell from the housing.

The bottom supporting plate 60A may be made of, for example, polypropylene (PP) or polyethyleneterephthalate (PET).

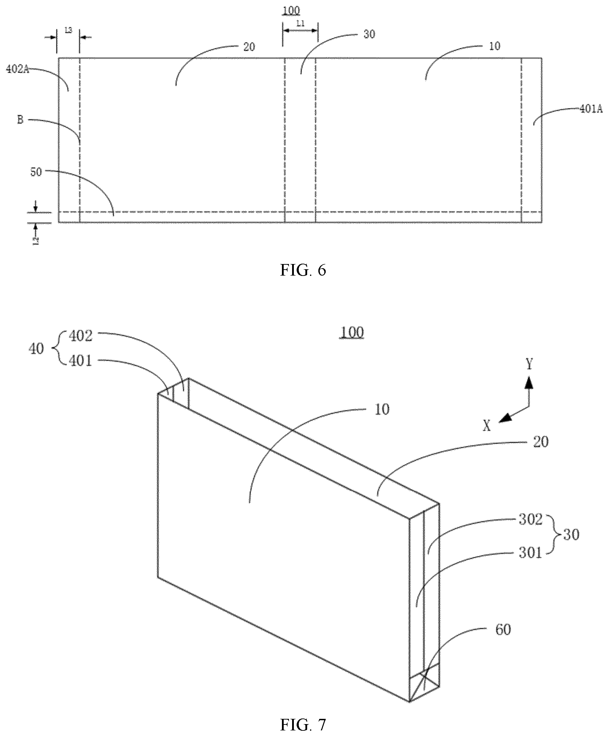

Referring to FIG. 6, in an embodiment of the present disclosure, the first connecting portion 30 has a first length L1 in the first direction X.

The third insulating portion 50 has a second length L2 in the first direction X. The second length L2 is less than or equal to the first length L1. The third insulating portion 50 and the bottom supporting plate 60A cooperate to prevent the electrochemical substances of the cell from overflowing from the corners to corrode the housing.

In an embodiment of the present disclosure, the ratio of the second length L2 to the first length L1 is (1 to 10):10. That is, an orthographic projection of the third insulating portion 50 on the cell, for example, partially covers the bottom of the cell, or completely cover the bottom of the cell, depending on the actual application.

In an embodiment of the present disclosure, the fifth folding portion 401A extends in the first direction X, and the sixth folding portion 402A extends in the first direction X. Each of the fifth folding portion 401A and the sixth folding portion 402A has a third length L3 in the first direction X. The ratio of the third length L3 to the first length L1 is (5 to 10):10.

Referring to FIG. 4, the fifth folding portion 401A is bent 90 degrees with respect to the first insulating portion 10 and is connected to the sixth folding portion 402A. The sixth folding portion 402A is bent 90 degrees with respect to the second insulating portion 20 and is connected to the fifth folding portion 401A. The sixth folding portion 402A and the fifth folding portion 401A can, for example, partially coincide with each other or completely coincide with each other. After coinciding, the orthogonal projection area on the cell is equal to the orthogonal projection area of the first connecting portion 30 on the cell. The third insulating portion 50 and the bottom supporting plate 60A are disposed at an opening of the accommodating cavity to support the cell and isolate the cell from the housing, so as to prevent the electrochemical substances from corroding the housing.

In an embodiment of the present disclosure, the fifth folding portion 401A and the sixth folding portion 402A are bonded to each other but not overlapped. A sum of the lengths of the fifth folding portion 401A and the sixth folding portion 402A extending in the first direction X after being bonded is equal to the first length L1. The ratio of the third length L3 of the fifth folding portion 401A to the third length L3 of the sixth folding portion 402A to the first length L1 is 1:1:2.

In another embodiment of the present disclosure, the fifth folding portion 401A and the sixth folding portion 402A are partially overlapped or fully overlapped. A sum of lengths of the fifth folding portion 401A and the sixth folding portion 402A extending toward one side of the first insulating portion 10 or the second insulating portion after been partially overlapped or fully overlapped is equal to the first length L1. The ratio of the third length L3 of the fifth folding portion 401A to the third length L3 of the sixth folding portion 402A to the first length L1 is (6 to 10):(6 to 10):10.

In an embodiment of the present disclosure, the first connecting portion 30 is integrally formed with the first insulating portion 10, the second insulating portion 20, and the third insulating portion 50. The fifth folding portion 401A is integrally formed with the third insulating portion 50 and the first insulating portion 10. The sixth folding portion 402A is integrally formed with the third insulating portion 50 and the second insulating portion 20.

In an embodiment of the present disclosure, a crease B is formed at any one of the joints of the first insulating portion 10, the second insulating portion 20, the first connecting portion 30, the second connecting portion 40, and the third insulating portion 50. The crease B is a pre-crease, that is, the crease B can be processed first during the factory processing stage, for example, to facilitate subsequent folding and forming.

### Embodiment 3

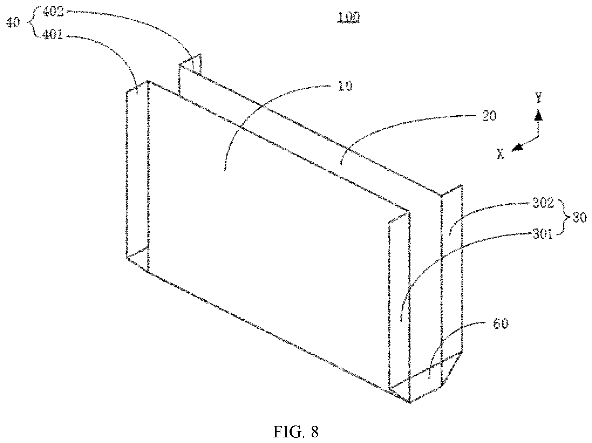

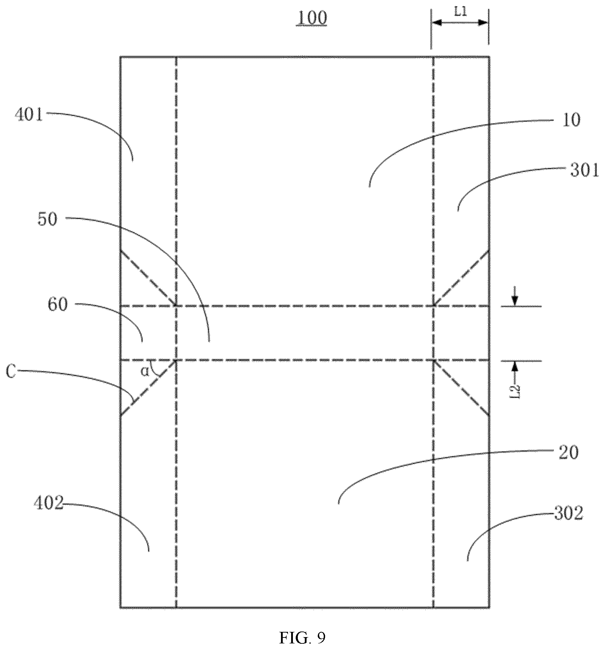

Referring to FIGs. 7 to 9, in a third aspect, the present disclosure provides a cell insulation protective sheath 100, which includes:
a first insulating portion 10 and a second insulating portion 20 disposed opposite to each other;
a first connecting portion 30 and a second connecting portion 40 disposed opposite to each other and connecting the first insulating portion 10 and the second insulating portion 20, respectively;
a third insulating portion 50 connected to the first insulating portion 10, the second insulating portion 20, the first connecting portion 30, and the second connecting portion 40; wherein the first insulating portion 10, the second insulating portion 20, the third insulating portion 50, the first connecting portion 30, and the second connecting portion 40 enclose to form an accommodating cavity in which a cell is disposed; and
two folding portions 60 connected to the first insulating portion 10, the second insulating portion 20, the first connecting portion 30, and the second connecting portion 40, respectively; the two folding portions 60 are attached to the cell in the second direction Y, and one side of the folding portion 60 away from the cell is connected to the first connecting portion 30 or the second connecting portion 40.

In an embodiment, the first connecting portion 30 includes a first folding portion 301 and a second folding portion 302. The first folding portion 301 is vertically connected to the first insulating portion 10. The second folding portion 302 is vertically connected to the second insulating portion 20. The first folding portion 301 and the second folding portion 302 are connected in the first direction X.

The second connecting portion 40 includes a third folding portion 401 and a fourth folding portion 402. The third folding portion 401 is vertically connected to one side of the first insulating portion 10 away from the first folding portion 301. The fourth folding portion 402 is vertically connected to one side of the second insulating portion 20 away from the second folding portion 302. The third folding portion 401 and the fourth folding portion 402 are connected in the first direction X.

In an embodiment, the cell insulation protective sheath 100 in the third embodiment is substantially the same as that of the cell insulation protective sheath 100 in the first embodiment, and the difference lies in that one side of the folding portion 60 in the third embodiment is attached to the cell and the other side of the folding portion 60 is attached to the first connection portion 30 or the second connection portion 40 disposed oppositely, however, the folding portion 60 in the first embodiment is not attached to the cell, and is attached to only one side of the first connection portion 30 or the second connection portion 40 disposed oppositely away from the cell. Each of the first folding portion 301, the second folding portion 302, the third folding portion 401, and the fourth folding portion 402 in the third embodiment is provided with a crease C. The crease C is formed by extending the acute angle α formed between the first folding portion 301, the second folding portion 302, the third folding portion 401, and the fourth folding portion 402 and the third insulating portion 50. The included angle between the crease C and the third insulating portion 50 is 45 degrees.

In the forming process of the cell insulation protective sheath 100, the first insulating portion 10 and the second insulating portion 20 are folded by 90 degrees and are disposed opposite to each other. The first folding portion 301, the second folding portion 302, the third folding portion 401 and the fourth folding portion 402 are folded by 90 degrees to one side away from the cell. The two folding portions 60 are located on the side of part of the cell and disposed opposite to each other based on the creases C on the first folding portion 301, the second folding portion 302, the third folding portion 401 and the fourth folding portion 402. The connecting parts of the first folding portion 301, the second folding portion 302, the third folding portion 401 and the fourth folding portion 402 with the two folding portions 60 are triangular, and then the first folding portion 301, the second folding portion 302, the third folding portion 401 and the fourth folding portion 402 are folded by another degrees, and attached to the side of the two folding portions 60 away from the cell to form an accommodating cavity. The folding portions 60 cooperate with the first folding portion 301, the second folding portion 302, the third folding portion 401 and the fourth folding portion 402 to cover the corners of the cell to prevent the electrochemical substances from overflowing from the corners and corroding the housing. For other structures, please refer to embodiment 1, and details are not described herein.

When the cell insulation protective sheath is formed, for example, by using an adhesive or hot melting connection; that is, the side of the cell insulation protective sheath 100 facing the cell is adhered, the cell insulation protective sheath 100 is bonded to the cell.

The present disclosure also provides a battery, which includes:
a housing;
a cell located in the housing; and
the cell insulation protective sheath according to any one of Embodiment 1, Embodiment 2 or Embodiment 3, the cell insulation protective sheath covers the cell and is located between the cell and the housing.

## Claims

1. A cell insulation protective sheath comprising:
a first insulating portion (10) and a second insulating portion (20) disposed opposite to each other;
a first connecting portion (30) and a second connecting portion (40) disposed opposite to each other and connecting the first insulating portion (10) and the second insulating portion (20), respectively;
a third insulating portion (50) connected to the first insulating portion (10), the second insulating portion (20), the first connecting portion (30), and the second connecting portion (40), respectively; wherein the first insulating portion (10), the second insulating portion (20), the third insulating portion (50), the first connecting portion (30), and the second connecting portion (40) enclose to form an accommodating cavity in which a cell is disposed; and
two folding portions (60) integrally connected to the third insulating portion (50) and attached to one side of the first connecting portion (30) and one side of the second connecting portion (40) away from the cell, respectively.

2. The cell insulation protective sheath according to claim 1, wherein the first connecting portion (30) comprises a first folding portion (301) and a second folding portion (302), the first folding portion (301) is vertically connected to the first insulating portion (10), the second folding portion (302) is vertically connected to the second insulating portion (20), and the first folding portion (301) and the second folding portion (302) are connected in a first direction;
the second connecting portion (40) comprises a third folding portion (401) and a fourth folding portion (402), the third folding portion (401) is vertically connected to one side of the first insulating portion (10) away from the first folding portion (301), the fourth folding portion (402) is vertically connected to one side of the second insulating portion (20) away from the second folding portion (302), and the third folding portion (401) and the fourth folding portion (402) are connected in the first direction; and
one of the two folding portions (60) is attached and connected to the first folding portion (301) and the second folding portion (302), and another one of the two folding portions (60) is attached and connected to the third folding portion (401) and the fourth folding portion (402).

3. The cell insulation protective sheath according to claim 2, wherein the first folding portion (301) and the second folding portion (302) partially overlap or completely overlap; and the third folding portion (401) and the fourth folding portion (402) partially overlap or completely overlap.

4. The cell insulation protective sheath according to claim 3, wherein the first folding portion (301) and the third folding portion (401) extend from the first insulating portion (10) to the second insulating portion (20) in the first direction; the second folding portion (302) and the fourth folding portion (402) extend from the second insulating portion (20) to the first insulating portion (10) in the first direction; and each of the first folding portion (301), the third folding portion (401), the second folding portion (302) and the fourth folding portion (402) has a first length; and
each of the two folding portions (60) extends in a second direction and has a second length in the second direction, wherein the second length is less than the first length.

5. The cell insulation protective sheath according to claim 4, wherein a ratio of the second length to the first length is (2 to 8): 10.

6. The cell insulation protective sheath according to claim 4, wherein a distance of the third insulating portion in the first direction is a third length, and a ratio of the third length to the first length is 10:(5 to 10).

7. The cell insulation protective sheath according to any one of claims 2 to 6, wherein the third insulating portion (50) is integrally formed with the first insulating portion (10), the second insulating portion (20), and the two folding portions (60); the first folding portion (301) and the third folding portion (401) are integrally formed with the first insulating portion (10); and the second folding portion (302) and the fourth folding portion (402) are integrally formed with the second insulating portion (20), respectively.

8. The cell insulation protective sheath according to any one of claims 4 to 6, wherein each of the two folding portions (60) comprises an integrally formed first sub-portion (601), a second sub-portion (602) and a third sub-portion (603); the second sub-portion (602) is connected to one side of the third insulating portion (50) and is attached and connected to the first connection portion (30) or the second connection portion (40) in the second direction; and the first sub-portion (601) and the third sub-portion (603) are respectively disposed on both sides of the second sub-portion (602);
one of the first sub-portion (601) and the third sub-portion (603) is attached to the first folding portion (301) or the third folding portion (401), and one side of the first sub-portion (601) or one side of the third sub-portion (603) away from the first folding portion (301) or the third folding portion (401) is attached to the second sub-portion (602);
another one of the first sub-portion (601) and the third sub-portion (603) is attached to the second folding portion (302) or the fourth folding portion (402), and one side of the another one of the first sub-portion (601) and the third sub-portion (603) away from the second folding portion (302) or the fourth folding portion (402) is attached to the second sub-portion (602); and
wherein a crease is formed at both joints of the first sub-portion (601) and the third sub-portion (603) with the second sub-portion (602), and the crease forms an acute angle α with with one side of the second sub-portion (602) close to the third insulating portion (50), wherein 45°≤α≤60°.

9. A cell insulation protective sheath comprising:
a first insulating portion (10) and a second insulating portion (20) disposed opposite to each other;
a first connecting portion (30) and a second connecting portion (40) disposed opposite to each other and connecting the first insulating portion (10) and the second insulating portion (20), respectively; the second connecting portion (40) comprising a fifth folding portion (401A) and a sixth folding portion (402A) connected to each other in a first direction, one of the fifth folding portion (401A) and the sixth folding portion (402A) being connected to the first insulating portion (10) and another one of the fifth folding portion (401A) and the sixth folding portion (402A) being connected to the second insulating portion (20);
a third insulating portion (50) disposed on a same side of the first insulating portion (10), the second insulating portion (20), the first connecting portion (30), and the second connecting portion (40); the first insulating portion (10), the second insulating portion (20), the first connecting portion (30), the second connecting portion (40), and the third insulating portion (50) enclosing to form an accommodating cavity in which a cell is disposed; and
a bottom supporting plate (60A) connected to one side of the third insulating portion (50) away from the cell by hot melting.

10. The cell insulation protective sheath according to claim 9, wherein the first connecting portion (30) has a first length in the first direction; and
the third insulating portion (50) has a second length in the first direction, and the second length is less than or equal to the first length.

11. The cell insulation protective sheath according to claim 10, wherein a ratio of the second length to the first length is (1 to 10):10.

12. The cell insulation protective sheath according to claim 10, wherein the fifth folding portion (401A) extends towards one side close to the sixth folding portion (402A) in the first direction, the sixth folding portion (402A) extends towards one side close to the fifth folding portion (401A) in the first direction, both the fifth folding portion (401A) and the sixth folding portion (402A) have a third length in the first direction, and a ratio of the third length to the first length is (5 to 10):10.

13. The cell insulation protective sheath according to any one of claims 10 to 12, wherein the first connecting portion (30) is integrally formed with the first insulating portion (10), the second insulating portion (20) and the third insulating portion (50); the fifth folding portion (401A) is integrally formed with the third insulating portion (50) and the first insulating portion (10); and the sixth folding portion (402A) is integrally formed with the third insulating portion (50) and the second insulating portion (20).

14. The cell insulation protective sheath according to any one of claims 1 to 13, wherein the cell insulation protective sheath is formed by hot melting connection.

15. A battery comprising:
a housing;
a cell located in the housing; and
a cell insulation protective sheath (100) according to any one of claims 1 to 14 covering the cell and is located between the cell and the housing.
